# EUROPÄISCHE PATENTANMELDUNG

(11) **EP 2 746 456 A1**
(43) Veröffentlichungstag der Anmeldung: **25.06.2014**
(21) Anmeldenummer: 13197451.1
(22) Anmeldetag: 16.12.2013
(51) Int. Cl.: D06F 58/20

(54) **Haushaltsgerät mit effizientem Latentwärmespeicher sowie Verfahren zu seinem Betrieb**

(30) Priorität: 18.12.2012 DE 102012223613
(71) Anmelder: BSH Bosch und Siemens Hausgeräte GmbH, 81739 München (DE)
(72) Erfinder: Heyer-Wevers, Marcus, Dr., 10585 Berlin (DE); Wachinger, Thomas, 85250 Altomünster (DE)

(57) **Zusammenfassung**

Die Erfindung betrifft ein Haushaltsgerät 1 in Form eines Trockners, eines Waschtrockners, einer Waschmaschine oder einer Geschirrspülmaschine mit einem Latentwärmespeicher 7, umfassend ein Phasenwechsel-Speichermedium 10 und einen eine Wärmeleitfähigkeit verbessernden kohlenstoffhaltigen Zusatzstoff 11, wobei der kohlenstoffhaltige Zusatzstoff Kohlenstoffnanoröhren (CNTs) umfasst. Die Erfindung betrifft außerdem ein Verfahren zum Betrieb dieses Haushaltsgerätes.

## Beschreibung

Die Erfindung betrifft ein Haushaltsgerät in Form eines Trockners, eines Waschtrockners, einer Waschmaschine oder einer Geschirrspülmaschine mit einem effizienten Latentwärmespeicher sowie ein bevorzugtes Verfahren zu seinem Betrieb. Das Haushaltsgerät umfasst dabei insbesondere ein Phasenwechsel-Speichermedium und einen eine Wärmeleitfähigkeit verbessernden kohlenstoffhaltigen Zusatzstoff.

Bei der Benutzung von Haushaltsgeräten ist der wirtschaftliche Umgang mit der eingesetzten Energie sehr wichtig. Besonders viel Energie in Form von Wärme fällt bei Haushaltsgeräten wie z.B. Waschmaschinen, Wäschetrocknern oder Geschirrspülmaschinen an. Es ist daher bekannt, in einem Haushaltsgerät nicht mehr benötigte Wärmeenergie in einem darin enthaltenen Latentwärmespeicher zu speichern. Trockner mit einem Latentwärmespeicher sind an sich bekannt.

Die DE 3710710 A1 beschreibt einen Kondensationswäschetrockner mit einem geschlossenen Umluftkreislauf, in dem ein Umluftventilator, ein elektrischer Lufterhitzer, ein Wäschebehälter, ein Wärmetauscher und ein Latentwärmespeicher mit einem Latentwärmespeichermittel angeordnet sind, wobei sich der Latentwärmespeicher im Umluftkreislauf zwischen dem Wärmetauscher und dem elektrischen Lufterhitzer befindet. Der Latentwärmespeicher speichert die in der feuchtwarmen Prozessluft aus der Trockenkammer enthaltene Wärmeenergie. Wenn der gesamte Inhalt des Latentwärmespeichers (im Folgenden als "Speichermedium" abgekürzt) geschmolzen ist und die Kühlmittelzufuhr zum Wärmetauscher eingeschaltet werden muss, kann der elektrische Lufterhitzer gedrosselt oder ausgeschaltet werden, weil der Latentwärmespeicher zur Erhitzung der Prozessluft verwendet werden kann.

Die DE 102 24 940 A1 offenbart einen Kondensationswäschetrockner mit einer Trockenkammer, einem geschlossenen Prozessluftkreislauf, einem Prozessluftgebläse, einer Heizeinrichtung sowie einem im Prozessluftkreislauf entnehmbar angeordneten Latentwärmespeicher. Dieser ersetzt den allgemein üblichen, mit Luft arbeitenden Wärmeaustauscher. Der Latentwärmespeicher kann somit unabhängig vom Trockner separat entladen werden.

Bei diesen Kondensationswäschetrocknern mit einem Latentwärmespeicher erwärmt die aus der Trockenkammer strömende feuchtwarme Prozessluft das Kühlmedium in einem Wärmetauscher (z.B. Luft-Luft-Wärmetauscher), ohne dass die im erwärmten Kühlmedium enthaltene Wärme zurückgewonnen wird.

Die DE 10 2008 006 348 A1 beschreibt daher einen Kondensationstrockner mit einer Trockenkammer für zu trocknende Gegenstände, einem Prozessluftkanal, in dem sich eine elektrische Heizung, ein Wärmetauscher und ein Gebläse befinden, einem Latentwärmespeicher und einem Kühlluftkanal, wobei der Latentwärmespeicher im Kühlluftkanal angeordnet ist.

Ein Latentwärmespeicher enthält im Allgemeinen ein Phasenwechsel-Speichermedium (im Folgenden auch als "PCM-Speichermedium" oder abgekürzt als "Speichermedium" bezeichnet), bei dem Wärmeenergie über ihre Verwendung für einen Phasenwechsel (Phasenübergang) des Speichermediums gespeichert wird. Bei der Wärmeaufnahme eines Latentwärmespeichers schmilzt im Allgemeinen bei einem Phasenwechsel das Speichermedium wie z.B. ein Paraffin oder ein Salzhydrat auf. Der aufgeschmolzene Anteil, insbesondere wenn er sich als Schicht zwischen dem Speichermedium und einem zweiten Wärme tauschenden Körper befindet, kann aber den Wärmeübergang behindern. Dadurch wir die Effizienz der Wärmeübertragung auf das Speichermedium verlangsamt. Insgesamt verschlechtert sich somit die Effizienz der Wärmeübertragung. Es wurde daher bereits versucht, die Wärmeleitung im Latentwärmespeicher durch Zugabe von expandiertem Graphit zum Speichermedium zu verbessern.

So beschreibt die WO 98/04644 A ein Verfahren bzw. System zur Speicherung von Wärme oder Kälte in einem Speicherverbundmaterial, ein derartiges Speicherverbundmaterial und ein Verfahren zu dessen Herstellung. Das Speicherverbundmaterial weist ein einen Phasenübergang durchlaufendes Material (PCM) auf, z.B. ein Paraffin, das in einer Matrix aus expandiertem Graphit eingebettet ist.

Aufgabe der vorliegenden Erfindung war es vor diesem Hintergrund daher, ein Haushaltsgerät in Form eines Trockners, eines Waschtrockners, einer Waschmaschine oder einer Geschirrspülmaschine sowie ein Verfahren zu seinem Betrieb mit einem Latentwärmespeicher bereitzustellen, bei dem die Effizienz des Latentwärmespeichers verbessert ist. Es soll ein rascherer Wärmeaustausch möglich sein, insbesondere durch effizientere und schnellere Aufnahme von Wärmeenergie durch ein im Latentwärmespeicher eingesetztes Phasenwechsel-Speichermedium.

Die Lösung dieser Aufgabe wird nach dieser Erfindung erreicht durch ein Haushaltsgerät in Form eines Trockners, eines Waschtrockners, einer Waschmaschine oder einer Geschirrspülmaschine sowie ein Verfahren zu seinem Betrieb mit den Merkmalen der entsprechenden unabhängigen Patentansprüche. Bevorzugte Ausführungsformen des erfindungsgemäßen Haushaltsgeräts sowie des erfindungsgemäßen Verfahrens sind in den jeweiligen abhängigen Patentansprüchen aufgeführt. Bevorzugten Ausführungsformen des erfindungsgemäßen Verfahrens entsprechen bevorzugte Ausführungsformen des erfindungsgemäßen Haushaltsgeräts und umgekehrt, auch wenn dies hierin nicht explizit festgestellt ist.

Gegenstand der Erfindung ist somit ein Trockner, ein Waschtrockner, eine Waschmaschine oder eine Geschirrspülmaschine, welche nachstehend auch nur als Haushaltsgerät bezeichnet werden, mit einem Latentwärmespeicher, umfassend ein Phasenwechsel-Speichermedium und einen eine Wärmeleitfähigkeit verbessernden kohlenstoffhaltigen Zusatzstoff, wobei der kohlenstoffhaltige Zusatzstoff Kohlenstoffnanoröhren (CNTs) umfasst. Ein Waschtrockner ist hierbei ein Kombinationsgerät, das über eine Waschfunktion zum Waschen von Wäsche und über eine Trocknungsfunktion zum Trocknen von feuchter Wäsche verfügt.

Bevorzugt enthält das Phasenwechsel-Speichermedium mindestens ein anorganisches Salzhydrat und/oder eine organische Verbindung.

Vorzugweise enthält das Haushaltsgerät im Latentwärmespeicher ein Phasenwechsel-Speichermedium mit einem Phasenübergang vom flüssigen in den festen Zustand im Temperaturbereich von 30 bis 65°C, noch mehr bevorzugt im Temperaturbereich von 35 bis 60°C und ganz besonders bevorzugt im Temperaturbereich von 45 bis 55°C.

In einer bevorzugten Ausführungsform der Erfindung enthält das im Haushaltsgerät eingesetzte Phasenwechsel-Speichermedium ein Salzhydrat, wobei das Salzhydrat vorzugsweise mindestens ein Salz aus der Gruppe, die aus Natriumacetat, Natriumthiosulfat, Magnesiumnitrat, Ammoniumnitrat und Magnesiumchlorid besteht, enthält. Als Zusätze zu anderen Salzen können auch Kaliumnitrat und Lithiumnitrat verwendet werden.

Beispiele für geeignete Salzhydrate sind beispielsweise:
- eine Mischung von 58,7 Gew-% Mg(NO₃)₂ · 6 H₂O und 41,3 Gew.-% MgCl₂ · 6 H₂O mit einem Schmelzpunkt von 59°C;
- eine Mischung von 61,5 Gew.-% Mg(NO₃)₂ · 6 H₂O und 38,5 Gew.-% NH₄NO₃ mit einem Schmelzpunkt von 52°C;
- CH₃COONa (Natriumacetat) · 3 H₂O mit einem Schmelzpunkt von 54°C; und
- Na₂S₂O₃ (Natriumthiosulfat) · 5 H₂O mit einem Schmelzpunkt von 48°C.

In einer weiteren bevorzugten Ausführungsform der Erfindung enthält das Speichermedium eine organische Verbindung. Beispiele für geeignete organische Verbindungen oder Mischungen von organischen Verbindungen sind:
- Paraffine (Wärmeparaffine) mit unterschiedlichen Schmelzpunkten;
- Myristinsäure mit einem Schmelzpunkt von 58°C;
- eine Mischung von 89 Gew.-% Palmitinsäure und 11 Gew.-% Acetamid mit einem Schmelzpunkt von 57,2°C;
- eine Mischung von 74,9 Gew.-% Palmitinsäure und 25,1 Gew.-% Propionamid mit einem Schmelzpunkt von 50°C.

Überdies kann als Speichermedium im Latentwärmespeicher auch eine Mischung von organischen und anorganischen Verbindungen verwendet werden. Ein Beispiel hierfür ist eine Mischung von 80 Gew.-% Acetamid und 20 Gew.-% NaNO₃ mit einem Schmelzpunkt von 59°C.

Erfindungsgemäß besonders bevorzugt ist ein Haushaltsgerät, in welchem das Speichermedium organische Verbindungen enthält oder aus diesen besteht. Besonders bevorzugt ist es hierbei, wenn das Speichermedium ein Paraffin enthält.

Im erfindungsgemäßen Haushaltsgerät enthält der Latentwärmespeicher Kohlenstoffnanoröhren vorzugsweise in einer Menge von 0,1 bis 15 Gew.-%, bezogen auf die Gesamtmasse des Latentwärmespeichers, insbesondere bezogen auf die Gesamtmasse aus Speichermedium und kohlenstoffhaltigem Zusatzstoff.

Kohlenstoffnanoröhren (carbon nanotubes, CNTs) im Sinne der Erfindung sind insbesondere mikroskopisch kleine röhrenförmige Gebilde aus Kohlenstoffatomen, die eine wabenartige Struktur mit Sechsecken und jeweils drei Bindungspartnern einnehmen. Kohlenstoffnanoröhren haben im Allgemeinen einen Durchmesser von 0,4 nm bis 50 nm und eine Länge von 10 µm bis 10 mm. Die Kohlenstoffnanoröhren können ein oder mehrwandig sein. Erfindungsgemäß ist es bevorzugt, dass die Kohlenstoffnanoröhren mehrwandig sind.

Die erfindungsgemäß eingesetzten Kohlenstoffnanoröhren umfassen vorzugsweise mehrwandige Kohlenstoffnanoröhren mit einem mittleren Durchmesser der Röhren im Bereich von 10 bis 20 nm, vorzugsweise von 13 bis 16 nm.

Die für die Verwendung im Latentwärmespeicher einsetzbaren Kohlenstoffnanoröhren sind auf verschiedene Weise herstellbar, beispielsweise durch Verdampfung von Graphit mit einem Laser oder durch eine Lichtbogenentladung zwischen Kohlenstoffelektroden. Erfindungsgemäß werden vorzugsweise Kohlenstoffnanoröhren eingesetzt, die erhältlich sind durch Abscheidung aus der Dampfphase bei der katalytischen Zersetzung von Kohlenwasserstoffen (CVD). Eine geeignete Herstellungsmethode für Kohlenstoffnanoröhren ist beispielsweise in der US 2009/0134363 A beschrieben.

Der im erfindungsgemäßen Haushaltsgerät eingesetzte Latentwärmespeicher weist im Allgemeinen eine Latentwärmespeicherwand auf, die in der Regel das Speichermedium umfasst. Da der Latentwärmespeicher Wärme aufnehmen aber auch abgeben muss, also auch als Wärmetauscher funktioniert, besteht die Latentwärmespeicherwand im Allgemeinen zumindest an dem für einen Wärmeaustausch vorgesehenen Teil aus einem gut wärmeleitenden Material, z.B. einem Metall wie Aluminium oder Kupfer, oder aus einem thermoplastischen Kunststoff, der vorzugsweise mit einer verbesserten Wärmeleitfähigkeit ausgestattet ist.

In einer bevorzugten Ausführungsform des erfindungsgemäßen Haushaltsgeräts umfasst die Latentwärmespeicherwand einen thermoplastischen Kunststoff. Hierbei ist es wiederum bevorzugt, dass die vorgenannten Kohlenstoffnanoröhren in der Latentwärmespeicherwand enthalten sind.

Dabei wird für die Latentwärmespeicherwand insbesondere ein den thermoplastischen Kunststoff enthaltender Verbundwerkstoff eingesetzt. Im Verbundwerkstoff des vorliegenden Wärmetauschers werden vorzugsweise Kohlenstoffnanoröhren mit einem Durchmesser von 5 bis 15 nm und einer Länge von 1 bis 15 µm eingesetzt. Der Verbundwerkstoff enthält die Kohlenstoffnanoröhren (CNTs) vorzugsweise in einer Menge von 0,1 bis 15 Gew.-% und besonders bevorzugt in einer Menge von 0,8 bis 8 Gew.-%, jeweils bezogen auf den Verbundwerkstoff.

Der thermoplastische Kunststoff im Verbundwerkstoff ist vorzugsweise ein thermoplastischer Kunststoff, der ausgewählt ist aus der Gruppe, die aus Polyolefinen, Olefincopolymerisaten und Styrolcopolymerisaten besteht. In einer bevorzugten Ausführungsform ist das Polyolefin Polypropylen. In einer weiteren bevorzugten Ausführungsform ist das Styrolcopolymerisat ein Acrylnitril-Butadien-Styrol-Copolymer (ABS). Der Verbundwerkstoff enthält neben dem thermoplastischen Kunststoff und den Kohlenstoffnanoröhren vorzugsweise nur übliche Additive.

Der im Latentwärmespeicher des erfindungsgemäßen Haushaltsgerätes vorzugsweise eingesetzte Verbundwerkstoff wird im Allgemeinen durch Vermischung des thermoplastischen Kunststoffes mit den Kohlenstoffnanoröhren in der Schmelze des Kunststoffs durchgeführt. Im Allgemeinen wird hierzu ein Extruder, insbesondere ein Zweischneckenextruder, herangezogen. Es hat sich als besonders vorteilhaft herausgestellt, wenn die Kohlenstoffnanoröhren dabei als Masterbatches eingesetzt werden, die neben den Kohlenstoffnanoröhren noch weitere Zusatzstoffe enthalten. Vorzugsweise wird die Herstellung des Verbundwerkstoffes so durchgeführt, dass die Kohlenstoffnanoröhren orientiert werden. Dies kann beispielsweise durch Strecken der Schmelze aus thermoplastischem Polymer bei der Schmelztemperatur des Polymeren oder darüber und/oder durch Strecken des Verbundwerkstoffes im festen Zustand geschehen.

Im erfindungsgemäßen Haushaltsgerät ist im Allgemeinen mindestens ein Teil der Kohlenstoffnanoröhren im Phasenwechsel-Speichermedium dispergiert. In einer besonders bevorzugten Ausführungsform der Erfindung enthält der Latentwärmespeicher außerdem geblähten Graphit, vorzugsweise in einer Menge von höchstens 15 Gew.-%, bezogen auf die Gesamtmasse von Speichermedium und kohlenstoffhaltigen Zusatzstoffen.

Die erfindungsgemäß einsetzbaren Speichermedien zeigen eine mehr oder weniger ausgeprägte Tendenz zur Unterkühlung. Erfindungsgemäß kann zwar ein Speichermedium in Form einer unterkühlten Lösung verwendet werden. Vorzugsweise wird jedoch eine Unterkühlung vermieden. Zu diesem Zweck wird dem Speichermedium häufig ein Keimbildner zugesetzt. Dem Fachmann sind für verschiedene Speichermedien geeignete Keimbildner bekannt.

In einer Ausführungsform der Erfindung mit einem verbesserten Wärmeaustausch mit dem Speichermedium weist der Latentwärmespeicher des erfindungsgemäßen Haushaltsgeräts in seinem Innern Mittel zur Erzeugung einer Strömung im Speichermedium auf.

In einer weiteren bevorzugten Ausführungsform des erfindungsgemäßen Haushaltsgeräts ist der Latentwärmespeicher abnehmbar. Die Entladung des Latentwärmespeichers kann dann unabhängig vom Haushaltsgerät stattfinden.

Besonders vorteilhaft ist das Haushaltsgerät ein Trockner, der eine Trockenkammer für zu trocknende Gegenstände, einen Prozessluftkanal, in dem sich eine elektrische Heizung, ein Wärmetauscher und ein Gebläse befinden, und einen Kühlluftkanal aufweist. Vorzugsweise ist hierbei der Latentwärmespeicher im Kühlluftkanal oder einem Umluftkanal, welcher Teil eines Prozessluftkanals ist angeordnet.

Bei Anordnung des Latentwärmespeichers im Kühlluftkanal sind der Volumenstrom und die Leistung des Wärmetauschers, z.B. eines Luft-Luft-Wärmetauschers, im Allgemeinen auf die Entladetemperatur abgestimmt, so dass die Differenz zwischen der Entladetemperatur und der Temperatur der Kühlluft beim Austritt aus dem Wärmetauscher genügend groß ist, um eine effiziente Aufladung des Latentwärmespeicher(medium)s zu ermöglichen. Diese Temperaturdifferenz beträgt im Allgemeinen 3 bis 25°C, vorzugsweise 5 bis 20° und ganz besonders bevorzugt 8 bis 15°C. Unter diesen Bedingungen verläuft der Wärmeaustausch besonders günstig. Der Schmelzpunkt des Speichermediums entspricht in der Regel der Entladetemperatur des Latentwärmespeichers.

Die im Latentwärmespeicher durch Abkühlung von erwärmter Kühlluft gespeicherte Wärmeenergie kann für den Fall, dass das Haushaltsgerät ein Wäschetrockner ist, zur Erwärmung von Prozessluft im Prozessluftkanal und/oder der Trockenkammer herangezogen werden. Erfindungsgemäß ist es bevorzugt, wenn die Erwärmung der Prozessluft in der Trockenkammer, d.h. als Ergebnis eines Wärmetausches zwischen Latentwärmespeicher und Trockenkammer, stattfindet. Hierbei ist es bevorzugt, dass eine dem Kühlluftkanal abgewandte Oberfläche des Latentwärmespeichers von der Trockenkammer maximal 5 cm, vorzugsweise maximal 3 cm und besonders bevorzugt maximal 2 cm beabstandet ist. Es ist überdies bevorzugt, dass die dem Kühlluftkanal abgewandte Oberfläche des Latentwärmespeichers konkav ist. Bei dieser Ausführungsform ist es überdies bevorzugt, dass ein Abstand zwischen der konkaven Oberfläche und einer Außenoberfläche der Trockenkammer zwischen 0,5 und 5 cm beträgt.

Ein in einem Kondensationstrockner eingesetzter Latentwärmespeicher weist vorzugsweise auf einer dem Kühlluftkanal zugewandten Oberfläche des Latentwärmespeichers Rippen auf. Diese Rippen können der Führung der Kühlluft durch den Latentwärmespeicher dienen. Alternativ oder zusätzlich hierzu können die Rippen mit einem Speichermedium gefüllt sein.

Für den Betrieb eines Kondensationstrockners als erfindungsgemäßem Haushaltsgerät hat es sich als vorteilhaft erwiesen, wenn im Prozessluft- oder Kühlluftkanal vor und hinter einem darin befindlichen Latentwärmespeicher jeweils ein Temperatursensor angeordnet ist. Die von den beiden Temperatursensoren gemessenen Temperaturen, insbesondere deren Differenz, erlaubt eine Bestimmung des Ladezustands des Latentwärmespeichers. Hierbei bedeutet Ladezustand das Ausmaß des Phasenübergangs vom flüssigen in den festen Zustand im Phasenwechsel-Speichermedium des Latentwärmespeichers. Der Ladezustand ist somit ein Maß für die Fähigkeit des Latentwärmespeichers zur Speicherung von Wärmeenergie. Die Temperatursensoren sind vorzugsweise mit einer Steuereinrichtung verbunden, die automatisch eine Abschaltung oder Zuschaltung der elektrischen Heizung auslöst.

Der erfindungsgemäße Latentwärmespeicher kann auch in einem wasserführenden Haushaltsgerät eingesetzt werden. Besonders vorteilhaft ist das Haushaltsgerät daher eine Wäschewaschmaschine oder eine Geschirrspülmaschine, die einen Wasserzuflusskanal, einen Wasserabflusskanal und einen mit dem Wasserzufluss- und Wasserabflusskanal verbundenen Behandlungsraum aufweist. Unter Wasser wird in diesem Zusammenhang das wässrige Reinigungsmedium verstanden, dem noch weitere Zusätze wie Wasch-, Spül- und Pflegemittel zugesetzt sein können. Ferner weist die Wäschewasch- oder Geschirrspülmaschine vorzugsweise eine im Wasserzuflusskanal oder im Behandlungsraum angeordnete Heizeinrichtung zum Erwärmen des Reinigungsmediums auf.

Die im Latentwärmespeicher durch Abkühlung von erwärmtem Abwasser gespeicherte Wärmeenergie kann für den Fall, dass das Haushaltsgerät eine Wäschewasch- oder Geschirrspülmaschine ist, zur Erwärmung des zufließenden Wassers bzw. Reinigungsmediums herangezogen werden. Die für einen Wäschetrockner bevorzugten Ausführungsformen sind sinngemäß auch für den Einsatz in einer Wäschewasch- oder Geschirrspülmaschine anwendbar.

Insbesondere wird bei der Wäschewaschmaschine oder der Geschirrspülmaschine der Latentwärmespeicher vorzugsweise zwischen dem Wasserzuflusskanal und dem Wasserabflusskanal derart angeordnet, dass ein Übergang der Wärme des im Wasserabflusskanal fließenden Wassers auf den Latentwärmespeicher und vom Latentwärmespeicher auf das durch den Wasserzuflusskanal geführte Wasser erfolgt. Hierzu ist der Latentwärmespeicher bevorzugt im innigen Kontakt mit dem Wasserzufluss- und dem Wasserabflusskanal oder in einem Abstand kleiner gleich 10 mm von dem Wasserzufluss- und Wasserabflusskanal angeordnet.

Gegenstand der Erfindung ist außerdem ein Verfahren zum Betrieb eines Haushaltsgerätes in Form eines Trockners, eines Waschtrockners, einer Waschmaschine oder einer Geschirrspülmaschine mit einem Latentwärmespeicher, umfassend ein Speichermedium und einen die Wärmeleitfähigkeit verbessernden kohlenstoffhaltigen Zusatzstoff, wobei der kohlenstoffhaltige Zusatzstoff Kohlenstoffnanoröhren (CNTs) umfasst und wobei eine im Haushaltsgerät erzeugte oder dem Haushaltsgerät zugeführte Wärmeenergie im Latentwärmespeicher insbesondere über einen Phasenwechsel im Speichermedium gespeichert wird.

In einer bevorzugten Ausführungsform ist das Verfahren ein Verfahren zum Betrieb eines Kondensationstrockners mit einer Trockenkammer für zu trocknende Gegenstände, einem Prozessluftkanal, in dem sich eine elektrische Heizung, ein Wärmetauscher und ein Gebläse befinden, einem Latentwärmespeicher und einem Kühlluftkanal, wobei der Latentwärmespeicher im Kühlluftkanal angeordnet ist, und wobei bei eingeschalteter elektrischer Heizung im Wärmetauscher erwärmte Kühlluft an den ein Speichermedium enthaltenden Latentwärmespeicher geführt wird und der Latentwärmespeicher aufgeladen wird, indem in der erwärmten Kühlluft enthaltene Wärmeenergie im Speichermedium gespeichert wird.

In einer bevorzugten Ausführungsform dieses Verfahrens wird für die Speicherung der in der erwärmten Kühlluft enthaltenen Wärmeenergie ein Phasenübergang im Speichermedium von fest nach flüssig herangezogen. Vorzugsweise wird hierbei die Speicherung der Wärmeenergie durchgeführt, bis der Phasenübergang im Speichermedium von fest nach flüssig beendet ist.

Ganz besonders bevorzugt wird beim erfindungsgemäßen Verfahren eine im Allgemeinen vorhandene elektrische Heizung nach Beendigung des Phasenübergangs abgeschaltet. Die im Latentwärmespeicher gespeicherte Energie kann dann für ein weiteres Heizen verwendet werden. In einem Trockner sinkt daraufhin im Allgemeinen die Temperatur der Prozessluft und der Kühlluft. Die Prozessluft in der Trockenkammer wird dann über die im Speichermedium gespeicherte Wärmeenergie erwärmt, wobei die Trocknung von Wäschestücken in der Trockenkammer dann im Allgemeinen auf einem niedrigeren Temperaturniveau stattfindet als bei ausschließlicher Verwendung einer elektrischen Heizung.

Die Erfindung hat den Vorteil, dass ein Trockner, ein Waschtrockner, eine Waschmaschine oder eine Geschirrspülmaschine mit einem Latentwärmespeicher mit einer verbesserten Effizienz betrieben werden kann. Die Wärmeenergie kann besser ausgenutzt werden, da der Wärmeaustausch zwischen dem Latentwärmespeicher und einer Wärme aufnehmenden oder abgebenden Komponente im Haushaltsgerät verbessert ist. Dadurch kann sich eine große Oberfläche des Latentwärmespeichers erübrigen, so dass er sehr flexibel an die Raumverhältnisse in einem Haushaltsgerät angepasst werden kann. Die höhere Effizienz ergibt sich insbesondere aus einer hohen Be- und Entladedynamik des Latentwärmespeichers, hohen Lade- und Entladeströmen, hohen Leistungsdichten, wobei dies bei relativ kleinen Wärmetauscherflächen möglich ist. Überdies ergeben sich aufgrund der geringeren Anforderungen an einen Bauraum in einem solchen Haushaltsgerät sowie der vergrößerten Geschwindigkeit des Wärmeaustausches bisher nicht umsetzbare Anwendungen.

Die Erfindung ist insbesondere von Vorteil, wenn das Haushaltsgerät ein Trockner für Wäsche, insbesondere ein Kondensationstrockner, ist. Die Erfindung ermöglicht in Ausführungsformen den Betrieb eines Kondensationstrockners bei einer relativ hohen Umgebungstemperatur, bei der eine Ableitung von erwärmter Kühlluft in den Aufstellraum des Trockners nicht wünschenswert ist.

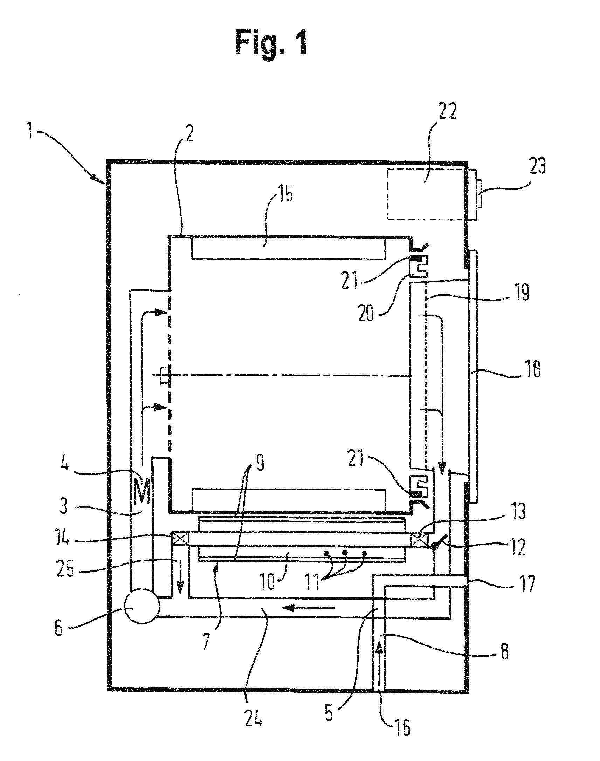

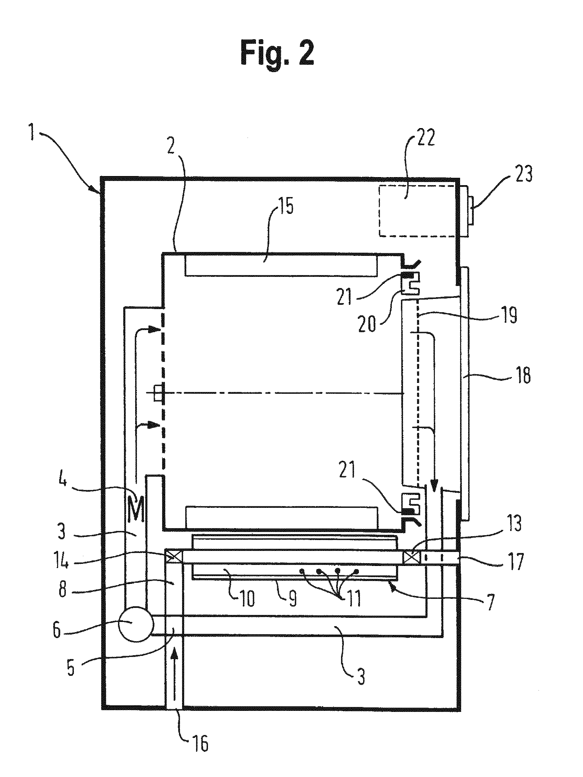

Weitere Einzelheiten der Erfindung ergeben sich unter Bezugnahme auf die Figuren 1 und 2 aus der nachfolgenden Beschreibung von zwei nicht einschränkenden Ausführungsbeispielen für ein erfindungsgemäßes Haushaltsgerät, in welchem ein erfindungsgemäßes Verfahren durchgeführt werden kann. Das Haushaltsgerät ist hierbei in beiden Fällen ein Kondensationstrockner.

Figur 1 zeigt einen senkrecht geschnittenen Kondensationstrockner (im Folgenden auch mit "Trockner" abgekürzt) gemäß einer ersten Ausführungsform der Erfindung, bei der ein Latentwärmespeicher im Abluftkanal in unmittelbarer Nähe der Trockenkammer angeordnet ist.

Figur 2 zeigt einen senkrecht geschnittenen Kondensationstrockner (im Folgenden auch mit "Trockner" abgekürzt) gemäß einer zweiten Ausführungsform der Erfindung, bei der ein Latentwärmespeicher im Kühlluftkanal in unmittelbarer Nähe der Trockenkammer angeordnet ist.

Der in Figur 1 dargestellte Trockner 1 weist eine um eine horizontale Achse drehbare Trommel als Trockenkammer 2 auf, innerhalb welcher Mitnehmer 15 zur Bewegung von Wäsche während einer Trommeldrehung befestigt sind. Prozessluft wird mittels eines Gebläses 6 im Prozessluftkanal 3 über eine elektrische Heizung 4 durch die Trommel 2 geführt. Nach Austritt aus der Trommel 2 wird die mit Feuchtigkeit beladene Prozessluft durch einen ersten Umluftkanal 24 und einen zweiten Umluftkanal 25 geführt, die mittels eines Steuerungsmechanismus 12 so geschlossen und geöffnet werden können, dass der aus der Trommel 2 kommende feuchtwarme Prozessluftstrom beliebig auf den ersten Umluftkanal 24 und den zweiten Umluftkanal 25 aufgeteilt werden kann. Im ersten Umluftkanal 24 wird die feuchtwarme Prozessluft durch einen Luft-Luft-Wärmetauscher 5 geleitet, wo ein Wärmetausch mit Kühlluft, die von einem Kühllufteingang 16 bis zu einem Kühlluftausgang 17 fließt, stattfindet. Die feuchtwarme Prozessluft kühlt unter Kondensation der in ihr enthaltenen Feuchtigkeit ab und wird wiederum über das Gebläse 6 und die elektrische Heizung 4 in die Trockenkammer 2 geführt, wodurch der Prozessluftkreis geschlossen ist. Die kondensierte Feuchtigkeit wird in einem in Fig. 1 nicht gezeigten Kondensatbehälter aufgefangen.

Der zweite Umluftkanal 25 wird dagegen durch einen Latentwärmespeicher 7 geleitet, wo die feuchtwarme Prozessluft durch Übertragung der in ihr enthaltenen Wärmeenergie auf ein Phasenwechsel-Speichermedium 10, das hier ein Paraffin ist, abgekühlt wird.

Die Feuchtigkeit in der Prozessluft kann auch hier kondensieren und in einem hier nicht gezeigten Kondensatbehälter aufgefangen werden. Das Paraffin kann Wärmenergie durch einen Phasenübergang von fest nach flüssig speichern. Im Speichermedium Paraffin 10 sind als erster Zusatzstoff mehrwandige Kohlenstoffnanoröhren mit einem mittleren Durchmesser der Röhren von 13 bis 16 nm in einer Menge von 5 Gew.-% dispergiert, bezogen auf die Gesamtmasse von Speichermedium und kohlenstoffhaltigen Zusatzstoffen. Nicht gesondert gezeigt ist ein Anteil an geblähtem Graphit als zweitem kohlenstoffhaltigen Zusatzstoff in einer Menge von 4 Gew.-% bezogen auf das Gesamtmasse von Speichermedium und kohlenstoffhaltigen Zusatzstoffen. Im Latentwärmespeicher 7 ist das Speichermedium 10 von einer Latentspeicherwand 9 umgeben, die vorliegend aus einem thermoplastischen Kunststoff mit einem Anteil von 5 Gew.-% Kohlenstoffnanoröhren mit einem mittleren Durchmesser der Röhren von 13 bis 16 nm, bezogen auf die gesamte Masse aus thermoplastischem Kunststoff und Kohlenstoffnanoröhren, gebildet ist.

Die abgekühlte Prozessluft im zweiten Umluftkanal 25 gelangt anschließend wieder mittels des Gebläses 6 in den Prozessluftkanal 3. Hierzu vereinigen sich vor dem Gebläse 6 wieder der erste Umluftkanal 24 und der zweite Umluftkanal 25.

Zur Trocknung von hier nicht näher gezeigten Wäschestücken in der Trommel 2 wird von der elektrischen Heizung 4 erwärmte Luft von hinten, d.h. von der einer Trocknertür 18 gegenüberliegenden Seite der Trommel 2, durch deren gelochten Boden in die Trommel 2 geleitet, kommt dort mit der zu trocknenden Wäsche in Berührung und strömt durch die Befüllöffnung der Trommel 2 zu einem Flusensieb 19 innerhalb der die Befüllöffnung verschließenden Trocknertür 18. Anschließend wird der Luftstrom in der Trocknertür 18 nach unten umgelenkt.

Nach Beendigung des Phasenübergangs im Speichermedium 10 ist der Latentwärmespeicher 7 aufgeladen. Dieser Zustand ist über eine Abnahme der von zwei vor und hinter dem Latentwärmespeicher 7 angeordneten Temperatursensoren, einem ersten Temperatursensor 13 und einem zweiten Temperatursensor 14, gemessenen Temperaturdifferenz feststellbar. Die Temperaturdifferenz wird einer Steuereinrichtung 22 übermittelt, welche sie in Hinblick auf die Aufladung des Latentwärmespeichers 7 auswertet und eine Abschaltung der elektrischen Heizung 4 veranlasst. Die Temperatur der in die Trockenkammer 2 eintretenden Prozessluft sinkt darauf hin und die Trocknung wird aufgrund der Wärmeübertragung vom Latentwärmespeicher 7 auf die Trockenkammer 3 auf einem geringeren Temperaturniveau weitergeführt. Der Abstand zwischen der Trockenkammer 2 und dem Latentwärmespeicher 7 beträgt vorliegend von 5 bis 10 mm.

Bei der ersten Ausführungsform kann der Latentwärmespeicher 7 alternativ auch zwischen dem zweiten Umluftkanal 25 und einem vom Wärmetauscher 5 stromabwärts liegenden Kanalabschnitt des Prozessluftkanals 3 oder des ersten Umluftkanals 24 angeordnet sein. Bei dieser Anordnung kann die im Latentwärmespeicher 7 gespeicherte Wärme an den Kanalabschnitt zur Erwärmung der im Wärmetauscher abgekühlten Prozessluft übertragen werden. Der Latentwärmespeicher kann in dieser Ausführung in einem Abstand von 0 bis 10 mm angeordnet sein.

Bei einer festgestellten Entladung des Latentwärmespeichers 7 (Beendigung des Phasenübergangs im Speichermedium von flüssig nach fest), die ebenfalls durch Auswertung der Temperaturmessungen mittels der beiden Temperatursensoren 13 und 14 festgestellt werden kann, kann die elektrische Heizung 4 wieder angeschaltet werden. Daraufhin steigt die Temperatur der Prozessluft und damit der Kühlluft nach Durchgang durch den Luft-Luft-Wärmetauscher 5, so dass der Latentwärmespeicher 7 wieder aufgeladen wird.

Durch die Führung der Prozessluft durch zwei Umluftkanäle, zwischen denen der Prozessluftstrom aufgeteilt werden kann, kann der Latentwärmespeicher bei dieser Ausführungsform sehr flexibel unter Berücksichtigung der jeweiligen Betriebsbedingungen des Trockners eingesetzt werden.

Die Trommel 2 wird in der in Fig. 1 gezeigten Ausführungsform am hinteren Boden mittels eines Drehlagers und vorne mittels eines Lagerschildes 20 gelagert, wobei die Trommel 2 mit einer Krempe auf einem Gleitstreifen 21 am Lagerschild 20 aufliegt und so am vorderen Ende gehalten wird. Die Steuerung des Trockners erfolgt über die Steuereinrichtung 22, die vom Benutzer über eine Bedieneinheit 23 geregelt werden kann.

Der in Figur 2 dargestellte Trockner 1 weist eine um eine horizontale Achse drehbare Trommel als Trockenkammer 2 auf, innerhalb welcher Mitnehmer 15 zur Bewegung von Wäsche während einer Trommeldrehung befestigt sind. Prozessluft wird mittels eines Gebläses 6 im Prozessluftkanal 3 über eine elektrische Heizung 4 durch die Trommel 2 geführt. Nach Austritt aus der Trommel 2 wird die mit Feuchtigkeit beladene Prozessluft im Prozessluftkanal 3 durch einen Luft-Luft-Wärmetauscher 5 geleitet, wo ein Wärmetausch mit Kühlluft, die von einem Kühllufteingang 16 stammt, stattfindet. Die Prozessluft kühlt unter Kondensation der in ihr enthaltenen Feuchtigkeit ab und wird wiederum über das Gebläse 6 und die elektrische Heizung 4 in die Trockenkammer 2 geführt, wodurch der Prozessluftkreis geschlossen ist. Die kondensierte Feuchtigkeit wird in einem in Fig. 2 nicht gezeigten Kondensatbehälter aufgefangen. Die im Luft-Luft-Wärmetauscher 5 erwärmte Kühlluft wird bei dieser Ausführungsform durch einen Latentwärmespeicher 7 geleitet, wo sie durch Übertragung von Wärmeenergie von der erwärmten Kühlluft auf ein Speichermedium 10, das hier ein Paraffin ist, abgekühlt wird. Das Paraffin kann Wärmenergie durch einen Phasenübergang von fest nach flüssig speichern. Im Speichermedium Paraffin 10 sind als erster Zusatzstoff mehrwandige Kohlenstoffnanoröhren mit einem mittleren Durchmesser der Röhren von 13 bis 16 nm in einer Menge von 5 Gew.-%, bezogen auf die Gesamtmasse von Speichermedium und kohlenstoffhaltigen Zusatzstoffen, dispergiert. Nicht gesondert gezeigt ist ein Anteil an geblähtem Graphit als zweitem kohlenstoffhaltigen Zusatzstoff in einer Menge von 4 Gew.-%, bezogen auf die Gesamtmasse von Speichermedium und kohlenstoffhaltigen Zusatzstoffen. Im Latentwärmespeicher 7 ist das Speichermedium 10 von einer Speichermediumwand 9 umgeben, die vorliegend aus einem thermoplastischen Kunststoff mit einem Anteil von 5 Gew.-% Kohlenstoffnanoröhren mit einem mittleren Durchmesser der Röhren von 13 bis 16 nm, bezogen auf die gesamte Masse aus thermoplastischem Kunststoff und Kohlenstoffnanoröhren gebildet ist.

Die abgekühlte Kühlluft wird anschließend über einen Kühlluftausgang 17 in den Aufstellraum des Trockners 1 geleitet.

Zur Trocknung von hier nicht näher gezeigten Wäschestücken in der Trommel 2 wird von der elektrischen Heizung 4 erwärmte Luft von der einer Trocknertür 18 gegenüberliegenden Seite der Trommel 2, durch deren gelochten Boden in die Trommel 3 geleitet, kommt dort mit der zu trocknenden Wäsche in Berührung und strömt durch die Befüllöffnung der Trommel 2 zu einem Flusensieb 19 innerhalb der die Befüllöffnung verschließenden Trocknertür 18. Anschließend wird der Luftstrom in der Trocknertür 18 nach unten umgelenkt und zum Luft-Luft-Wärmetauscher 5 geleitet.

Nach Beendigung des Phasenübergangs im Speichermedium 10 ist der Latentwärmespeicher 7 aufgeladen. Dieser Zustand ist über eine Abnahme der von zwei vor und hinter dem Latentwärmespeicher 7 angeordneten Temperatursensoren 13 und 14 gemessenen Temperaturdifferenz feststellbar. Die Temperaturdifferenz wird einer Steuereinrichtung 22 übermittelt, welche sie in Hinblick auf die Aufladung des Latentwärmespeichers 7 auswertet und eine Abschaltung der elektrischen Heizung 4 veranlasst. Die Temperatur der in die Trockenkammer 2 eintretenden Prozessluft sinkt darauf hin und die Trocknung wird aufgrund der Wärmeübertragung vom Latentwärmespeicher 7 auf die Trockenkammer 2 auf einem geringeren Temperaturniveau weitergeführt. Für eine effiziente Wärmeübertragung beträgt bei der hier gezeigten Ausführungsform der Erfindung der Abstand zwischen der Trockenkammer 2 und dem Latentwärmespeicher 7 von 5 bis 10 mm.

Wie bei der ersten Ausführungsform kann der Latentwärmespeicher 7 der zweiten Ausführungsform alternativ zwischen dem Kühlluftkanal und einem vom Wärmetauscher 5 stromabwärts liegenden Kanalabschnitt des Prozessluftkanals 3 angeordnet sein. Bei dieser Anordnung kann die im Latentwärmespeicher 7 gespeicherte Wärme an den Kanalabschnitt zur Erwärmung der im Wärmetauscher abgekühlten Prozessluft übertragen werden. Der Latentwärmespeicher kann auch in dieser Ausführungsform in einem Abstand von 0 bis 10 mm angeordnet sein.

Bei einer festgestellten Entladung des Latentwärmespeichers 7 (Beendigung des Phasenübergangs im Speichermedium von flüssig nach fest), die ebenfalls durch Auswertung der Temperaturmessungen mittels der Temperatursensoren 13 und 14 festgestellt werden kann, kann die elektrische Heizung 4 wieder angeschaltet werden. Daraufhin steigt die Temperatur der Prozessluft und damit der Kühlluft nach Durchgang durch den Luft-Luft-Wärmetauscher 5, so dass der Latentwärmespeicher 7 wieder aufgeladen wird.

Die Trommel 2 wird auch hier am hinteren Boden mittels eines Drehlagers und vorne mittels eines Lagerschildes 20 gelagert, wobei die Trommel 2 mit einer Krempe auf einem Gleitstreifen 21 am Lagerschild 20 aufliegt und so am vorderen Ende gehalten wird. Die Steuerung des Trockners erfolgt über die Steuereinrichtung 22, die vom Benutzer über eine Bedieneinheit 23 geregelt werden kann.

### Bezugszeichenliste

- 1: Trockner, Kondensationstrockner
- 2: Trockenkammer, Trommel
- 3: Prozessluftkanal
- 4: Elektrische Heizung
- 5: Wärmetauscher
- 6: Gebläse
- 7: Latentwärmespeicher
- 8: Kühlluftkanal
- 9: Latentwärmespeicherwand
- 10: Speichermedium, Phasenwechsel-Speichermedium
- 11: Kohlenstoffnanoröhren
- 12: Steuerungsmechanismus für den ersten und zweiten Umluftkanal
- 13: Erster Temperatursensor
- 14: Zweiter Temperatursensor
- 15: (Wäsche)Mitnehmer
- 16: Kühllufteingang
- 17: Kühlluftausgang
- 18: Trocknertür
- 19: Flusensieb
- 20: Lagerschild
- 21: Gleitstreifen
- 22: Steuereinrichtung
- 23: Bedieneinheit
- 24: Erster Umluftkanal
- 25: Zweiter Umluftkanal

## Patentansprüche

1. Haushaltsgerät (1) in Form eines Trockners, eines Waschtrockners, einer Waschmaschine oder einer Geschirrspülmaschine mit einem Latentwärmespeicher (7), welcher ein Phasenwechsel-Speichermedium (10) umfasst, **dadurch gekennzeichnet, dass** der Latentwärmespeicher (7) einen eine Wärmeleitfähigkeit verbessernden kohlenstoffhaltigen Zusatzstoff (11), welcher Kohlenstoffnanoröhren (CNTs) umfasst.

2. Haushaltsgerät (1) nach Anspruch 1, **dadurch gekennzeichnet, dass** das Phasenwechsel-Speichermedium (10) mindestens ein anorganisches Salzhydrat und/oder eine organische Verbindung enthält.

3. Haushaltsgerät (1) nach Anspruch 1 oder 2, **dadurch gekennzeichnet, dass** das Phasenwechsel-Speichermedium (10) einen Phasenübergang vom flüssigen in den festen Zustand im Temperaturbereich von 30 bis 65°C aufweist.

4. Haushaltsgerät (1) nach einem der Ansprüche 1 bis 3, **dadurch gekennzeichnet, dass** das Phasenwechsel-Speichermedium (10) ein Salzhydrat ist, das mindestens ein Salz aus der Gruppe enthält, die aus Natriumacetat, Natriumthiosulfat, Magnesiumnitrat, Ammoniumnitrat und Magnesiumchlorid besteht.

5. Haushaltsgerät (1) nach einem der Ansprüche 1 bis 4, **dadurch gekennzeichnet, dass** das Phasenwechsel-Speichermedium (10) ein Paraffin enthält.

6. Haushaltsgerät (1) nach einem der Ansprüche 1 bis 5, **dadurch gekennzeichnet, dass** der Latentwärmespeicher (7) Kohlenstoffnanoröhren (11) in einer Menge von 0,1 bis 15 Gew.-%, bezogen auf die Gesamtmasse des Latentwärmespeichers (7), enthält.

7. Haushaltsgerät (1) nach Anspruch 6, **dadurch gekennzeichnet, dass** die Kohlenstoffnanoröhren mehrwandige Kohlenstoffnanoröhren (11) mit einem mittleren Durchmesser im Bereich von 10 bis 20 nm umfassen.

8. Haushaltsgerät (1) nach einem der Ansprüche 1 bis 7, **dadurch gekennzeichnet, dass** mindestens ein Teil der Kohlenstoffnanoröhren (11) im Speichermedium (7) dispergiert sind.

9. Haushaltsgerät (1) nach einem der Ansprüche 1 bis 8, **dadurch gekennzeichnet, dass** Kohlenstoffnanoröhren (11) in einer Latentwärmespeicherwand (9) enthalten sind.

10. Haushaltsgerät (1) nach Anspruch 9, **dadurch gekennzeichnet, dass** die Latentwärmespeicherwand (9) einen thermoplastischen Kunststoff umfasst.

11. Haushaltsgerät (1) nach einem der Ansprüche 1 bis 10, **dadurch gekennzeichnet, dass** der Latentwärmespeicher (7) geblähten Graphit enthält.

12. Haushaltsgerät (1) nach einem der Ansprüche 1 bis 11, **dadurch gekennzeichnet, dass** es ein Trockner ist, der eine Trockenkammer (2) für zu trocknende Gegenstände, einen Prozessluftkanal (3), in dem sich eine elektrische Heizung (4), ein Wärmetauscher (5) und ein Gebläse (6) befinden, und einen Kühlluftkanal (8) aufweist.

13. Kondensationstrockner (1) nach einem der Ansprüche 1 bis 12, **dadurch gekennzeichnet, dass** der Latentwärmespeicher (7) im Kühlluftkanal (8) oder in einem Umluftkanal (25), welcher Teil eines Prozessluftkanals (3) ist, angeordnet ist.

14. Wasserführendes Haushaltsgerät in Form einer Wäschewaschmaschine oder einer Geschirrspülmaschine nach einem der Ansprüche 1 bis 11, **dadurch gekennzeichnet, dass** das Haushaltsgerät einen Wasserzuflusskanal, einen Wasserabflusskanal und einen mit dem Wasserzufluss- und Wasserabflusskanal verbundenen Behandlungsraum aufweist und dass der Latentwärmespeicher zwischen dem Wasserzuflusskanal und dem Wasserabflusskanal angeordnet ist.

15. Verfahren zum Betrieb eines Haushaltsgerätes (1) in Form eines Trockners, eines Waschtrockners, einer Waschmaschine oder einer Geschirrspülmaschine mit einem Latentwärmespeicher (7), umfassed ein Phasenwechsel-Speichermedium (10) und einen eine Wärmeleitfähigkeit verbessernden kohlenstoffhaltigen Zusatzstoff (11), wobei der kohlenstoffhaltige Zusatzstoff Kohlenstoffnanoröhren (CNTs) umfasst, und wobei eine im Haushaltsgerät (1) erzeugte oder dem Haushaltsgerät (1) zugeführte Wärmeenergie im Latentwärmespeicher (7) über einen Phasenwechsel im Phasenwechsel-Speichermedium (10) gespeichert wird.

16. Verfahren zum Betrieb eines Kondensationstrockners (1) nach Anspruch 13, dadurch gegenzeichnet, dass im Prozessluft- oder Kühlluftkanal (3, 8, 25) vor und hinter dem darin angeordneten Latentwärmespeicher (7) jeweils ein Temperatursensor (13, 14) angeordnet werden und dass ein Ladezustand des Latentwärmespeichers (7) mit von den Temperatursensoren (13, 14) gemessenen Temperaturen, insbesondere deren Differenz, bestimmt wird.
